## Europäisches Patentamt

## European Patent Office

## Office européen des brevets

(19)

(11) Publication number: **0 118 731**
**B1**

(12) **EUROPEAN PATENT SPECIFICATION**

(45) Date of publication of patent specification: **14.10.87**

(51) Int. Cl.⁴: **G 06 F 13/36**

(21) Application number: **84101083.8**

(22) Date of filing: **02.02.84**

(54) **Distributed-structure circuit for arbitrating the access requests to the bus of a multiprocessor system.**

(30) Priority: **03.02.83 IT 6711183**

(43) Date of publication of application:
**19.09.84 Bulletin 84/38**

(45) Publication of the grant of the patent:
**14.10.87 Bulletin 87/42**

(84) Designated Contracting States:
**DE FR GB NL**

(56) References cited:
**EP-A-0 035 731**
**US-A-4 326 250**

**PROCEEDINGS OF THE 1971 IEEE
INTERNATIONAL COMPUTER SOCIETY
CONFERENCE, 22nd-24th September 1971,
Boston, pages 51-52, IEEE, New York, US P.W.
WARD: "A scheme for dynamic priority control
in demand actuated multiplexing".**

(73) Proprietor: **CSELT Centro Studi e Laboratori
Telecomunicazioni S.p.A.
Via Guglielmo Reiss Romoli, 274
I-10148 Turin (IT)**

(72) Inventor: **Capizzi, Giuseppe Nicolo
Via della Resistenza, 15
Brandizzo (Torino) (IT)**
Inventor: **Melgara, Marcello
Via Sassi, 11
Valenza (Alessandria) (IT)**

(74) Representative: **Riederer Freiherr von Paar zu
Schönau, Anton et al
Van der Werth, Lederer & Riederer Freyung 615
Postfach 2664
D-8300 Landshut (DE)**

Courier Press, Leamington Spa, England.

## Description

The present invention relates to arbitrating circuits for the bus assignment in multiprocessor systems and in particular it concerns a distributed-structure circuit for arbitrating the access requests to the bus of a multiprocessor system, as stated in the prior art portion of claim 1 and known from US—A—4 326 250.

In the latest multiprocessors, the bus apt to interconnect the various system elements is requested to have higher and higher performances especially in terms of date exchange rate. Hence, also the circuits apt to arbitrate the access requests to the bus must be apt to handle said requests in short time periods, compatible with the operation time periods on the bus itself: an arbitration can be requested every 125 ns or even less.

The choice of a distributed structure of the arbitration circuit is in fact made to take into account these requirements; in addition it has the advantage over a centralized structure of not being strict but easy to reconfigure in case of failure of one or of a plurality of elements. However, the above prior art does not offer the following further characteristics such an arbitration circuit ought to have: priority dynamic-reassignment, so as to ensure an equal possibility of accessing the bus by all the elements, and dynamic and distributed initialization, i.e., an initial priority level of each element is to be computed, upon switching over, by the arbitration circuit itself, without the need of precabled data or data supplied from the outside, to increase the system flexibility without resorting to external controllers.

In case the implementation of such a distributed structure is made by integrated circuits, one integrated circuit for each element, a further problem arises, consisting of the propagation delay of the signals chiefly through the portion of the priority dynamic reassignment circuit.

The known arbitrating circuit distributed-structures, as that described in US—A—4 326 250, carry out at distributed level the main function of comparing the priority level of each arbitrating circuit with the priority level present on the priority bus, generally of the parallel type; the priority level is assigned to each arbitrating circuit from the outside either by an external centralized controller, as in the embodiment of the above prior art, or by the same elements of the multiprocessor system. Said known arbitrating systems generally require external controllers, which excessively increase the complexity of the arbitrating structure and limit the maximum arbitrating rate attainable.

These problems are solved by the present invention of a distributed-structure arbitrating circuit as defined in claim 1, which carries out a dynamic and distributed initialization procedure by assigning each element with an initial priority vector, given by the vector present on the priority bus reduced by a binary unit, and effects a priority dynamic re-assignment of the cyclic type.

The circuit arrangement further minimizes the number of wires composing the priority bus, i.e. the bus connecting all its parts, by using a priority bus with connections of the binary tree type and composed of $\log_2 n$ wires (the number of elements being equal to n).

In a preferred embodiment of the present invention the comparator which receives at one input a binary number forming a priority vector for the respective element and at the other input a signal from the priority bus and the computing circuit of the future priority form a logic subdivided into two levels which are function of the weight of the bits of the priority vectors and which are particularly suited to be integrated.

These and other characteristics of the present invention will become clearer from the following description of a preferred embodiment thereof, given by way of example, and not in a limiting sense, in connection with the annexed drawings, in which:

—Fig. 1 shows an example of application of the distributed-structure arbitration circuit, provided by the invention, to a 32-element multiprocessor system;

—Figure 2 shows the time trend of a number of signals of Fig. 1;

—Figure 3 shows the circuit scheme of block ARB1 of Fig. 1;

—Figure 4 shows the flow chart relating to the block UC1 of Fig. 3;

—Figure 5 shows the implementing scheme of blocks COMP and NP of Fig. 3.

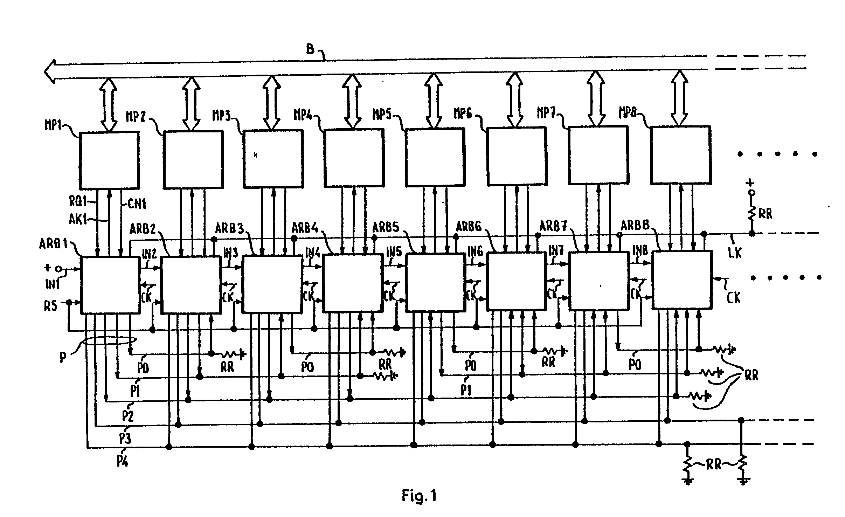

In Fig. 1 references MP1, ... MP8 indicate eight elements of the multiprocessor system which are to access bus B, the system provides in the described example 32 elements, but the other elements have not been shown in Fig. 1 for simplicity sake.

References ARB1, ... ARB8 indicate eight equal arbitration circuits, one for each system element, which implement a distributed arbitration structure; 32 arbitration circuits are provided, but the other 24 circuits have not been shown in the figure.

P denotes the priority bus composed of five wires P0,—P4; the number of wires is equal to the logarithm to the base two of the number of elements. The number of the wire corresponds to the bit weight (the least significant bit is present on P0, whilst the most significant one is on P4).

On bus P, at each cycle, the priority vector is present i.e. the binary coding of the address of the element with the highest priority which has the right of accessing the bus B.

The wires of bus P are connected to circuits ARB so as to realize a binary tree structure: wire P4 is connected to the corresponding output of all the circuits ARB; wire P3 is subdivided into two parts: the first part is connected to the first 16 circuits ARB and the second part to the remaining 16 ARB: wire P2 is subdivided into 4 parts of which the first connected to ARB1, ... ARB8, the second to the subsequent eight, and so on; wire P1 is subdivided into eight part each connecting four successive circuits (the first part connects ARB1, ... ARB4 and so on); wire P0 is subdivided into 16 parts each connecting two successive circuits (the first part connects ARB1 and ARB2, and so on).

Each wire of bus P is also connected to a resistance RR which in turn is connected to ground.

Each circuit ARB receives clock signal CK whose period is also the elementary time interval (hereinafter referred to as bus cycle) of acquisition of bus B by an element MP.

All circuits ARB receive the reset signal RS whose active state causes the start of the initialization procedure, which will be mentioned hereinafter; in addition each circuit ARB can emit a signal LK which is brought to all the other circuits ARB by means of the homonymous wire connected to the positive supply voltage through resistance RR. The logic value 0 on wire LK inhibits the priority reassignment procedure which will be described hereinafter; which can happen either during the initialization procedure or when an element MP acquires bus B for more cycles.

Signal IN1, which always carries the positive supply voltage value, when proceded by signal RS, starts the initialization procedure; when ARB1, whereto IN1 is transferred, terminates its own initialization procedure, it will generate signal IN2, which will start the corresponding procedure of ARB2 and so on up to the completion of the procedure concerning the last circuit ARB.

Each arbitration circuit receives from the respective element MP, signal RQ (RQ1 for ARB1 and so on) of access request to bus B, and signal CN (CN1 for ARB1) of bus request for more cycles, and supplies the corresponding circuit MP with signal AK (AK1 for ARB1...) enabling the access to bus B if it has won the contention procedure.

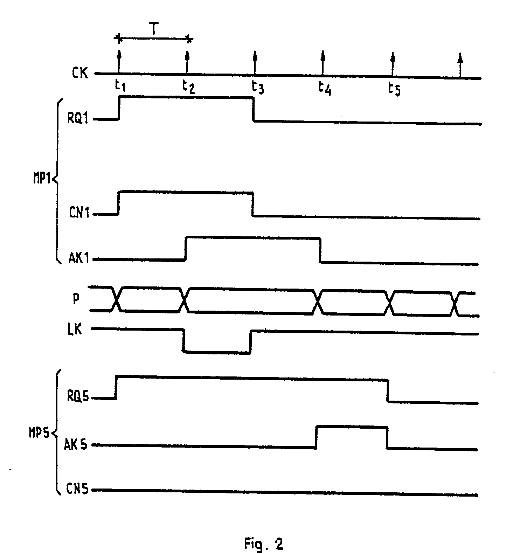

An example of contention procedure will be now described, for the assignment of bus B, between two elements MP1 and MP5, assuming that MP1 has higher priority than MP5 and that the initialization procedure is already over; reference will be made to Fig. 2.

Fig. 2 shows the trend in time of clock signal CK of period T: at the instant $t_1$ MP1 and MP5 request the access to the bus and hence set the respective signals RQ1, RQ5 to the active state (logic level 1). In addition MP1 requests the access for two cycles and hence it sets also the signal CN1 to 1, while CN5 will remain at 0, because MP5 requests the bus for an only cycle.

It is to be noted that at the beginning of each cycle, each circuit ARB modifies its own priority, according to the modalities described hereinafter: that is indicated in Fig. 2 with the transitions which take place on the priority bus P, unless signal LK is set, by one of the circuits MP, in the active state (logic level 0).

At instant $t_2$ bus B is free, so that, in the hypothesis MP1 has higher priority than MP5, ARB1 sets to 1 the enabling signal AK1 which remains active for the number of cycles requested by MP1, that is up to the cycle next to the instant in which MP1 resets signal CN1 to 0 (in the example of Fig. 2 CN1 resets to 0 in $t_3$ and AK1 in

$t_4$). In addition, upon bus acquisition, ARB1 sets signal LK to 0, up to the last but one acquired cycle (in the example, for the duration of a cycle, from $t_2$ to $t_3$), inhibiting then the procedure of priority reassignment which ought to have taken place in $t_3$.

Signal RQ1 remains at 1 till the end of the first cycle acquired by MP1, i.e. up to $t_3$.

When MP1 releases bus B (instant $t_4$), and assuming that no other element with higher priority has requested the bus, MP5 acquires the bus and ARB5 sets signal AK5 to 1 for the next cycle, up to the instant $t_5$, instant at which also RQ5 resets to 0.

The algorithm is now described according to which each arbitration circuit recalculates the priority vector, i.e. the binary number expressing its own priority level, taking into account that logic level 1 is considered as having higher priority than logic level 0.

Reference p will denote the priority vector present at a determined instant on bus P, r will denote the priority vector present at the same instant within each arbitrating logic, and d the future priority vector, i.e. the vector to be calculated.

Each vector is composed of m bits (in the present example m=5).

The j-th bit of the respective priority vector $(0 \le j \le m-1)$ will be denoted by p(j), r(j), d(j).

Each arbitration circuit examines vectors p and r, starting from the most significant bit, i.e. from j=m−1; if p(j)=r(j), it sets d(j)=0, going on towards the least least significant positions till it finds a position for which p(j)≠r (j); then for that position it sets d(j)=1. For the successive positions it sets d(j)=r(j). By instance if p=00101, r=00011, then it will be d=00111.

As to the initialization procedure, when arbitration circuits ARB (Fig. 1) receive reset signal RS, all their outputs on bus P are disabled and all the wires of bus P are then grounded through resistances RR, all of them assuming thus logic value 0.

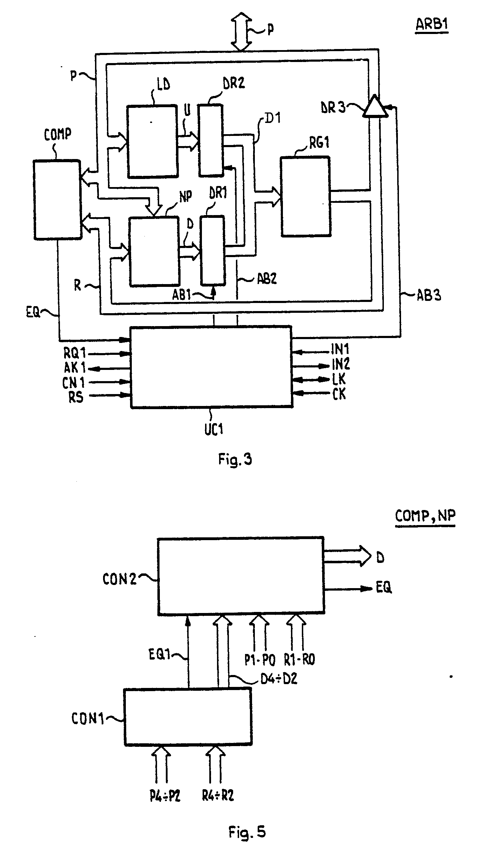

In Fig. 3 blocks COMP and NP implement the future-priority vector computing circuit.

Block COMP, consisting of an equality comparator, receives bus P carrying vector p and bus R carrying vector r. When the two incoming buses carry equal values, COMP emits an equality signal EQ.

Also block NP receives buses P and R and emits future-priority vector d at the output on bus D.

Only in presence of the enabling signal AB1, transmission circuit DR1 supplies register RG1 with said vector d through bus D1; only in this case vector d becomes internal priority vector r for the subsequent comparison.

Block NP implements the following Boolean equations:

$$d(j) = p(j) \; XOR \; r(j) \quad (\text{for } j=4)$$

$$d(j) = \overline{[\overline{d(j+1)} * p(j)]} \quad XOR \; r(j)$$
$$(3 \ge j \ge 0)$$

where XOR indicates the logic operation EX—OR and *the logic operation AND.

Block LD is a decrement logic which receives at the input bus P and supplies at the output on bus U the input binary value decremented by 1 (binary unit). The output value is the vector of initial priority i.

Block LD is implemented by a PLA logic (Programmed Logic Array), and not by usual counters, since the time available to carry out the subtraction operation is very short, i.e. of the order of magnitude of the period of clock signal CK. The embodiment of block LD, once the function it has to carry out is known, is not a problem to the skilled in the art.

The binary value present on bus U, only in presence of the enabling signal AB2, is supplied through transmission circuit DR2 and bus D1 to register RG1.

Register RG1 always emits at the output on bus R, the values stored. Bus R is also connected to transmitting circuit DR3, which only when it receives the enabling signal AB3, sends the contents of register RG1 on bus P.

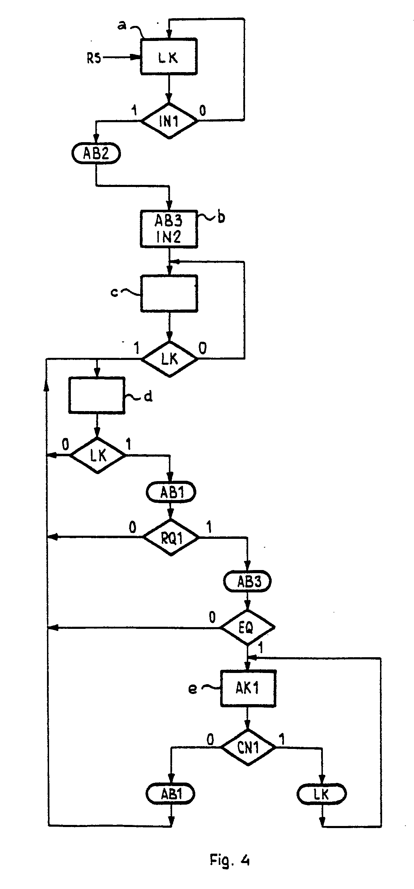

Block UC1 is the control unit realized by synthetizing a finite-state machine, by means of a PLA logic described by the flow-chart of Fig. 4 described hereinafter.

When UC1 (Fig. 3) receives signal RS, it sets itself in the state a (Fig. 4) in which it generates signal LK and loops in this state till it recognizes logic level 1 of signal IN1; upon this recognition, it generates signal AB2 enabling the storage in RG1 (Fig. 3) of the value, coming from LD, which is the initial priority value of element MP1 (Fig. 1).

Then UC1 goes to state b (Fig. 4) in which it generates signal AB3, which allows the initial priority value to be sent over bus P, and then it generates signal IN2 which is sent to arbiter ARB2 (Fig. 1).

Then UC1 goes to wait state c (Fig. 4), where it loops till when signal LK is reset to logic value 1, i.e. till when the initialization procedure of all the arbitrating circuits is over, each of these circuits starting its own procedure as soon as the upstream circuit procedure is over.

Then the first circuit of the series, in our case ARB1, as soon as it receives the reset signal RS, will find at once signal IN1 at logic value 1 and will generate at once signal AB2; the vector of initial priority p, which will be sent on bus P, will be that previously present on P itself, i.e. the vector composed of all logic values 0 (as all circuits DR1 are still disabled) reduced by binary value 1, i.e. a vector composed of all logic values 1. The second circuit of the series i.e. ARB2, will go out of state a, only after receiving signal IN2, i.e. after ARB1 has sent on bus P its initial vector: that will be taken by ARB2 as an input value for the corresponding block LD, which value is to be reduced and sent to the corresponding register RG1. Thus the initialization procedure goes on till when the last circuit ARB goes out of corresponding state a, causing signal LK to be reset to value 1.

At this point control units UC of all the arbitration circuits go out, at the same time, of state c and go to subsequent state d, which is the first operating state.

During the whole initialization procedure blocks LD and NP of each arbitration circuit continuously compute priority vectors which are sent on corresponding buses U and D.

In state d UC1 checks again whether LK is at 0: now however that can happen only if an element MP connected to another arbiter has acquired bus B for more cycles. When LK is at 1, UC1 generates signal AB1 which enables the loading in RG1 of the last priority vector d computed by NP.

Then if element MP1 does not request the access to bus B, UC1 returns to stated d; if on the contrary the access is requested, and hence signal RQ1 is at 1, UC1 generates signal AB3, allowing the value present on bus R to be transferred also onto bus P. Only at that instant UC1 considers the logic value of signal EQ emitted by COMP: if it is 0, it means that vectors p and r are different, and hence there is another element MP, with higher priority, which can acquire bus B, hence UC1 returns to state d; if the logic level of EQ is 1, that means that vectors p and r are equal and MP1 can acquire bus B. Then UC1 goes to state e (Fig. 4) in which it holds bus B and generates signal AK1. If CN1 has logic level 1, UC1 sets to 0 signal LK, which inhibits further arbitrating operations, and loops in state e, if or when CN1 is reset to 0, UC1 sets LK to 1, then it generates the enabling signal AB1 and returns to state d.

When desiring an integration of the whole arbitrating circuit ARB1, circuits COMP and NP can be implemented as shown in Fig. 5.

Since both COMP and NP have the same inputs, composed of buses P and R, these two blocks may be considered as an only logic unit subdivided into two levels CON1 and CON2 which are only function of the bit weight of the two input buses.

CON1 and CON2 are implemented by a PLA structure which is within the capacity of the skilled in the art, once defined the Boolean equations implemented by NP.

CON1 receives at the input wires P4, P3, P2 of bus P and wires R4, R3, R2 of bus R, i.e. the bits of two buses, whose weight is 4, 3, 2, and generates at the output a signal EQ1 indicating the equality of bits whose weight is 4, 3, 2, and the bits of vector d of future priority whose weight is 4, 3, 2 over wires D4, D3, D2 of bus D.

All the signals at the output of CON1, and wires P1, P0 of bus P and R1, R0 of bus R (i.e. the bits of the two buses whose weight is 1 and 0) are connected to the inputs of CON2 which emits at the output a signal EQ denoting the equality among all the bits of the two buses P and R and the bits of vector d on bus D completed by the remaining wires D1, D0 corresponding to bits whose weight is 1, 0.

The subdivision into CON1 and CON2 has been carried out to optimize the ratio between the occupied area in the integrated circuit and propagation time of the various signals through the blocks of Fig. 5, thus obtaining an area reduction of a factor nearly equal to seven, with respect to an embodiment by means of a unique-level PLA structure.

**Claims**

1. Circuit for arbitrating the access requests to a bus (B) by elements (MP1, MP2, ...) of a multiprocessor system, said circuit having a distributed structure composed of equal arbitrating devices (ARB1, ARB2, ...), each connected to the corresponding element and interconnected via a priority bus (P) having a binary-tree structure, the available time for accessing the bus being subdivided into successive cycles, wherein each of said arbitrating devices (ARB) comprises a comparator (COMP) which receives at one input a binary number forming a priority vector for the respective element (MP1, MP2, ...) and at the other input a signal from said priority bus (P), on which there is present a binary-number forming a priority vector p, and which emits an equality signal (EQ) of data present on said input buses; and a control logic (UC1) which if it receives said equality signal (EQ) from said comparator (COMP) emits towards the respective element (MP1) a signal (AK1) indicating the occurred bus acquisition, characterized by
—a first internal bus (R) carrying the binary number forming an instantaneous priority vector r of the respective element (MP1, MP2 ...), the priority vectors r being modified in a revolving manner;
—a computing circuit (NP) of the future priority within the revolving modification, which computing circuit receives at the inputs said priority bus (P) and first internal bus (R) and emits on a second internal bus (D) a binary number which forms a future priority vector d, computed at every cycle starting from the most significant position according to the following Boolean equations:

$$d(j) = p(j) \text{ XOR } r(j) \qquad (1)$$

$$d(j) = \overline{[d(j+1) * p(j)]} \text{ XOR } r(j) \qquad (2)$$

where equation (1) is valid for the bits of the most significant position of the vectors, the equation (2) is valid for the bits of all the other positions, symbols d(j), p(j), r(j) indicate the bit having j-th weight of the respective vectors d, p, r, while the symbols XOR and * indicate EX-OR and AND logic operations;
—a first transmission circuit (DR1) for sending on a fourth internal bus (D1) said future priority vector d present on said second internal bus (D) only when it receives a first enabling signal (AB1);
—a decrement logic (LD) subtracting at every cycle a fixed binary number from said priority vector p present on the priority bus (P) and obtaining and sending on a third internal bus (U) an initial-priority vector i;
—a second transmission circuit (DR2) sending on said fourth internal bus (D1) said initial-priority vector i present on said third internal bus (U) only when it receives a second enabling signal (AB2);
—an internal register (RG1) memorizing and supplying on said first internal bus (R) the priority vector present on said fourth internal bus (D1);
—a third transmission circuit (DR3), sending on said priority bus (P) the priority vector present on said first internal bus (R) only when it receives a third enabling signal (AB3);
—the control logic (UC1) carrying out in sequence at every cycle the following operations:
if a reset signal (RS) is active, sent at the same time to the control logic of all the arbitrating devices (ARB), it disables, at the same time as all the other control logics, all the outputs of the third transmission circuits (DR3) on said priority bus (P), on all the wires of said bus being then present a non-active logic level; if an initialization signal (IN1) emitted by the upstream arbitrating device is active, it emits an inhibition signal (LK) to all the other arbitrating devices for inhibiting the procedure of priority reassignment, and emits said second (AB2) and then said third (AB3) enabling signal to its own arbitrating device said initial priority vector i just computed by said decrement logic (LD) being loaded into said internal register (RG1) and then sent on said priority bus (P); then it emits an initialization signal (IN2) towards the downstream arbitrating device and disables said inhibition signal (LK), so that said initialization procedure starts in a first arbitrating device (ARB1), in which the pertaining initialization signal (IN1) is permanently set to an active logic level, and propagates till a last arbitrating device (ARBn), the arbitrating devices in this initialization procedure being activated in series; when the initialization procedure is over and said inhibition signal (LK) is deactivated, it emits said first enabling signal (AB1), so that said future priority vector d just computed by the relevant circuit (NP) is loaded into said internal register (RG1), and, if a signal of access request (RQ1) to the bus (B), coming from the respective element (MP1), is present, it emits said third enabling signal (AB3) allowing the contents of said internal register (RG1) to be transferred onto the priority bus (P) for being supplied to the comparator (COMP); if the element (MP1) has sent a signal (CN1) of request of the bus (B) for a plurality of cycles, it emits said inhibition signal (LK) to all the other arbitrating devices for inhibiting the procedure of priority reassignment up to the penultimate cycle requested, else it emits said first enabling signal (AB1) which indicates continuation of the procedure of priority reassignment.

2. Circuit for arbitrating according to claim 1, in which on said priority bus (P) logic level 1 is regarded as active logic level, characterized in that said decrement logic (LD) subtracts binary value 1 from the binary number present at its input.

3. Circuit for arbitrating according to claims 1 or 2, characterized in that said comparator (COMP) and said computing circuit of the future priority (NP) form a logic circuit subdivided into two levels (CON1, CON2), the first level receiving and processing the most significant bits of the input bus, and the second level the least significant bits.

4. Circuit for arbitrating according to claim 3, characterized in that, in case said vectors are composed of five bits, the first level (CON1) of said logic circuit receives at the input the bits of the three most significant positions of vectors r and p, and the second level (CON2) the bits of the two least significant positions.

**Patentansprüche**

1. Schaltung zur Entscheidung über die Zugriffsanforderungen von Elementen (MP1, MP2, ...) eines Multiprozessorsystems zu einem Bus (B), mit einer aus gleichen Schiedsvorrichtungen (ARB1, ARB2, ...) zusammengesetzten verteilten Struktur, wobei jede Schiedsvorrichtung mit dem entsprechenden Multiprozessorsystem-Element verbunden ist und die Schiedsvorrichtungen miteinander über einen Prioritätsbus (P) mit einer Binärbaum-Struktur verbunden sind, die für den Zugriff auf den Bus zur Verfügung stehende Zeit in aufeinanderfolgende Zyklen unterteilt ist und jede der Schiedsvorrichtungen (ARB) einen Komparator (COMP) und eine Steuerlogik (UC1) umfaßt, von denen der Komparator an einem Eingang eine binäre Zahl empfängt, die einen Prioritätsvektor für das betreffende Element (MP1, MP2, ...) bildet, und am anderen Eingang ein Signal vom Prioritätsbus (P), auf dem eine einen Prioritätsvektor p bildende binäre Zahl liegt, empfängt und ein Gleichheitssignal (EQ) der auf diesen Eingangsbussen vorhandenen Daten abgibt, und die Steuerlogik (UC1), wenn sie das Gleichheitssignal (EQ) vom Komparator (COMP) empfängt, an das betreffende Element (MP1) ein Signal (AK1) abgibt, das die durchgeführte Belegung des Busses anzeigt, gekennzeichnet durch

—einen ersten internen Bus (R), der die einen augenblicklichen Prioritätsvektor r des betreffenden Elements (MP1, MP2, ...) bildende binäre Zahl führt, wobei die Prioritätsvektoren r in revolvierender Art modifiziert werden;

—eine Rechenschaltung (NP) der innerhalb der revolvierenden Modifikation zukünftigen Priorität, wobei diese Rechenschaltung an den Eingängen den Prioritätsbus (P) und den ersten internen Bus (R) empfängt und auf einen zweiten internen Bus (D) eine binäre Zahl abgibt, die einen zukünftigen Prioritätsvektor d bildet, der in jedem Zyklus ausgehend von der Stelle höchster Wertigkeit entsprechend den folgenden booleschen Gleichungen berechnet wird:

$$d(j) = p(j) \text{ XOR } r(j) \qquad (1)$$

$$d(j) = [\overline{d(j+1)} * p(j)] \text{ XOR } r(j) \qquad (2)$$

wobei die Gleichung (1) für die Bits der höchstwertigen Stellen der Vektoren gilt, die Gleichung (2) für die Bits aller anderen Stellen gilt, die Symbole d(j), p(j) und r(j) das Bit mit dem j-ten Gewicht des betreffenden Vektors d, p bzw. r anzeigen und die Symbole XOR und * die logischen Operationen EX-ODER bzw. UND anzeigen;

—eine erste Sendeschaltung (DR1), die auf einem vierten internen Bus (D1) den auf dem zweiten internen Bus (D) vorliegenden zukünftigen Prioritätsvektor d nur dann sendet, wenn sie ein erstes Ansteuersignal (AB1) empfängt;

—eine Dekrement-Logik (LD), die bei jedem Zyklus vom auf dem Prioritätsbus (P) vorliegenden Prioritätsvektor p eine feste binäre Zahl substrahiert und die einen Anfangs-Prioritätsvektor i gewinnt und ihn auf einen dritten internen Bus (U) abgibt;

—eine zweite Sendeschaltung (DR2), die auf dem vierten internen Bus (D1) den auf dem dritten internen Bus (U) vorliegenden Anfangs-Prioritätsvektor i nur dann sendet, wenn sie ein zweites Ansteuersignal (AB2) empfängt;

—ein internes Register (RG1), das den auf dem vierten internen Bus (D1) vorliegenden Priotitätsvektor speichert und ihn auf den ersten internen Bus (R) abgibt;

—eine dritte Sendeschaltung (DR3), die auf dem Prioritätsbus (P) den auf dem ersten internen Bus (R) vorliegenden Prioritätsvektor nur dann sendet, wenn sie ein drittes Ansteuersignal (AB3) empfängt;

—die Steuerlogik (UC1), die aufeinanderfolgend in jedem Zyklus die folgenden Operationen durchführt:

wenn ein Rückstellsignal (RS) aktiv ist, das gleichzeitig an die Steuerlogik aller Schiedsvorrichtungen (ARB) gesendet wird, sperrt sie gleichzeitig wie alle anderen Steuerlogiken alle Ausgänge der dritten Sendeschaltungen (DR3) auf den Prioriätbus (P), so daß auf sämtlichen Leitern dieses Busses dann ein nicht-aktiver logischer Pegel vorliegt; wenn ein Initialisierungssignal (IN1), das von der nachrichtenstromaufwärts gelegenen Schiedsvorrichtung abgegeben worden ist, aktiv ist, gibt sie ein Sperrsignal (LK) an alle anderen Schiedsvorrichtungen ab, um den Vorgang der Prioritäts-Neuzuweisung zu sperren, und gibt das zweite (AB2) und dann das dritte (AB3) Ansteuersignal an ihre eigene Schiedsvorrichtung ab, wobei der Anfangs-Prioritätsvektor i, der soeben von der Dekrement-Logik (LD) berechnet worden ist, in das interne Register (RG1) geladen wird und dann auf dem Prioritätsbus (P) gesendet wird; sie gibt sodann ein Initialisierungssignal (IN2) an die nachrichtenstromabwärts gelegene Schiedsvorrichtung ab und macht das Sperrsignal (LK) unwirksam, so daß der Initialisierungsvorgang in einer ersten Schiedsvorrichtung (ARB1) beginnt, in der das zugehörige Initialisierungssignal (IN1) ständig auf einen aktiven logischen Pegel gesetzt ist, und schreitet bis zu einer letzten Schiedsvorrichtung (ARBn) fort, wobei die Schiedsvorrichtungen bei diesem Initialisierungsvorgang in Serie aktiviert werden; zur Zeit, da der Initialisierungsvorgang vorüber ist und das Sperrsignal (LK) desaktiviert ist, gibt sie das erste Ansteuersignal (AB1) ab, so daß der zukünftige Prioritätsvektor d, der soeben von der betreffenden Schaltung (NP) berechnet worden ist, in das interne Register (RG1) geladen wird, und gibt, wenn ein vom betreffenden Element (MP1) kommendes Signal einer Zugriffsanforderung (RQ1) zum Bus (B) vorliegt, das dritte Ansteuersignal (AB3) ab, das ermöglicht, daß der Inhalt des internen Registers (RG1) auf den Prioritätsbus (P) übertragen wird, um zum Komparator (COMP) geliefert zu werden; hat das Element (MP1) ein Signal (CN1) der Anforderung auf den Bus (B) über mehrere Zyklen abgegeben, so gibt sie das Sperrsignal (LK) an alle anderen Schiedsvorrichtungen zum Sperren des Vorgangs der Prioritäts-Neuzuweisung bis zum vorletzten geforderten Zyklus ab, woraufhin sie das erste Ansteuersignal (AB1) abgibt, das die Fortsetzung des Vorgangs der Prioiräts-Neuzuweisung anzeigt.

2. Schaltung zur Entsheidung nach Anspruch 1, bei der auf dem Prioritätsbus (P) der logische Pegel 1 der aktive logische Pegel ist, dadurch gekennzeichnet, daß die Dekrement-Logik (LD) von der an ihrem Eingang vorliegenden binären Zahl den binären Wert 1 subtrahiert.

3. Schaltung zur Entscheidung nach Anspruch 1 oder 2, dadurch gekennzeichnet, daß der Komparator (COMP) und die Rechenschaltung (NP) der zukünftigen Priorität eine logische Schaltung bilden, die in zwei Ebenen (CON1, CON2) unterteilt ist, von denen die erste Ebene vom Eingangsbus die Bits höchster Wertigkeit empfängt und verarbeitet und die zweite Ebene die Bits niedrigster Wertigkeit empfängt und verarbeitet.

4. Schaltung zur Entsheidung nach Anspruch 3, dadurch gekennzeichnet, daß im Fall, daß die Vektoren aus fünf Bits aufgebaut sind, die erste Ebene (CON1) der logischen Schaltung eingangsseitig die Bits der drei höchstwertigen Stellen der Vektoren r und p und die zweite Ebene (CON2) die Bits der zwei niedrigstwertigen Stellen empfängt.

**Revendications**

1. Circuit d'arbitrage pour les requêtes d'accès à un bus (B) par des éléments (MP1, MP2, ...) d'un système multiprocesseur, ledit circuit ayant une structure distribuée composée de dispositifs d'arbitrage égaux (ARB1, ARB2, ...), connectés chacun à l'élément correspondant, interconnectés à l'aide d'un bus de priorité (P) structuré à arbre binaire, le temps disponible pour l'accès au bus éant subdivisé en cycles successifs, où chacun desdits dispositifs d'arbitrage (ARB1) comprend un comparateur (COMP) qui reçoit à une entrée un nombre binaire constituant un vecteur de priorité pour l'élément correspondant (MP1, MP2, ...) et à l'autre entrée un signal provenant dudit bus de priorité (P), sur lequel est présent un nombre binaire constituant un vecteur de priorité p, et qui émet un signal d'égalité (EQ) des données présentes sur lesdits bus d'entrée; et une logique de commande (UC1) qui, si elle reçoit ledit signal d'égalité (EQ) dudit comparateur (COMP), émet vers l'élément respectif (MP1) un signal (AK1) indiquant que le bus (B) a été saisi, caractérisé par:

—un premier bus interne (R) qui véhicule le nombre binaire constituant un vecteur de priorité présente r de l'élément correspondant (MP1, MP2, ...) les vecteurs de priorité r étant modifiés d'une manière cyclique;

—un circuit (NP) de calcul de la priorité future dans la modification cyclique qui reçoit à ses entrées ledit bus de priorité (P) et ledit premier bus interne (R) et qui émet sur un deuxième bus interne (D) un nombre binaire constituant un vecteur de priorité future d, calculé à chaque cycle à partir de la position d'ordre le plus élevé d'après les équations Booléennes suivantes:

$$d(j) = p(j) \text{ XOR } r(j) \qquad (1)$$

$$d(j) = \overline{[d(j+1) * p(j)]} \text{ XOR } r(j) \qquad (2)$$

où l'équation (1) vaut pour les bits de la position d'ordre le plus élevé des vecteurs, l'équation (2) vaut pour les bits de tous les autres ordres, les symboles $d(j)$, $p(j)$, $r(j)$ indiquent le bit du j-ème ordre des vecteurs $d$, $p$, $r$ respectivement, et les symboles XOR et * indiquent les opérations logiques OU-EXCLUSIF et ET;

—un premier circuit de transmission (DR1) pour transmettre sur un quantrième bus interne (D1) ledit vecteur de priorité future d présent sur ledit deuxième bus interne (D) seulement à la réception d'un premier signal de validation (AB1);

—une logique de décrémentation (LD) pour soustraire à chaque cycle un nombre binaire fixe dudit vecteur de priorité p présent sur le bus de priorité (P) et pour obtenir et envoyer sur un troisième bus interne (U) un vecteur de priorité initiale i;

—un deuxième circuit de transmission (DR2) pour envoyer sur ledit quantrième bus interne (D1) ledit vecteur de priorité initiale i présent sur ledit troisième bus interne (U) seulement à la réception d'un deuxième signal de validation (AB2);

—un registre interne (RG1) pour stocker et fournir sur ledit premier bus interne (R) le vecteur de priorité présent sur ledit quatrième bus interne (D1);

—un troisième circuit de transmission (DR3) pour envoyer sur ledit bus de priorité (P) le vecteur de priorité présent sur le premier bus interne (R) seulement à la réception d'un troisième signal de validation (AB3);

—la logique de commande (UC1) effectuant en succession à chaque cycle les opérations suivantes: si un signal de remisé-à-zéro (RS) est actif, fourni à la logique de cmmande (UC1) de tous le dispositifs d'arbitrage (ARB) en même temps, elle inhibit, en même temps que les autres logiques de commande, toutes les sorties des troisièmes circuits de transmission (DR3) sur ledit bus de priorité (P), sur tous les fils dudit bus étant puis present un niveau logique non-actif; si un signal d'initialisation (IN1), émis par le dispositif d'arbitrage en amont, est actif, elle émet un signal d'inhibition (LK) à tous les dispositifs d'arbitrage pour inhiber la procédure de modification de la priorité, et émet ledit deuxième (AB2) quis ledit troisième (AB3) signal de validation vers son dispositif d'arbitrage, ledit vecteur de priorité initiale *i* calculé par ladite logique de décrémentation (LD) étant chargé dans ledit registre interne (RG1) et ensuite fourni sur ledit bus de priorité (P); ensuite elle émet un signal d'initialisation (IN2) vers le dispositif d'arbitrage en aval et inhibit ledit signal d'inhibition (LK), de manière que ladite procédure d'initialisation commence dans un premier dispositif d'arbitrage (ARB1), où le signal d'initialisation (IN1) pertinent est fixé en permanence à un niveau logique actif, et se propage jusqu'au dernier dispositif d'arbitrage (ARBn), les dispositifs d'arbitrage dans ladite procédeure d'initialisation étant activés en série; quand la procédure d'initialisation est terminée et ledit signal d'inhibition (LK) est remis à zéro, elle émet ledit premier signal de validation (AB1), de manière que ledit vecteur de priorité future *d*, calculé par le circuit (NP) respectif, soit chargé dans ledit registre interne (RG1) et, si un signal de requête d'accès au bus (B), provenant de l'élément (MP1) respectif, est présent, elle émet ledit troisième signal de validation (AB3) qui permet de transférer le contenu dudit registre interne (RG1) sur le bus de priorité (P) pour être fourni au comparateur (COMP); si l'élément (MP1) a envoyé un signal (CN1) de requête du bus (B) pour plusieurs cycles, elle émet ledit signal d'inhibition (LK) à tous les autres dispositifs d'arbitrage pour inhibir la procédure de modification de priorité, jusqu'à l'avant-dernier cycle requis, autrement elle émet ledit premier signal de validation (AB1), qui indique la continuation de la procédure de modification de priorité.

2. Circuit d'arbitrage selon la revendication 1, dans lequel sur ledit bus de priorité (P), le niveau logique "1" est le niveau logique actif, caractérisé en ce que ladite logique de décrémentation (LD) soustrait le nombre binaire "1" du nombre binaire présent à son entrée.

3. Circuit d'arbitrage selon les revendications 1 ou 2, caractérisé en ce que ledit comparateur (COMP) et ledit circuit (NP) de calcul de la priorité future constituent un circuit logique subdivisé en deux niveaux (CON1, CON2), dont le premier niveau reçoit et traite les bits des ordres les plus élevés des bus d'entrée, et le second les bits des ordres les plus bas.

4. Circuit d'arbitrage selon la revendication 3, caractérisé en ce que, dans le cas où lesdits vecteurs sont composés de cinq bits, ledit premier niveau (CON1) du circuit logique reçoit à son entrée les bits des trois ordres les plus élevés des vecteurs *r* et *p* et le second niveau (CON2) les bits des deux ordres les plus bas.

Fig. 1

Fig. 2

2

Fig. 3

Fig. 5

Fig. 4